# DEMANDE DE BREVET EUROPEEN

(11) **EP 2 353 829 A1**
(43) Date de publication de la demande: **10.08.2011**
(21) Numéro de dépôt: 10151866.0
(22) Date de dépôt: 28.01.2010
(51) Int. Cl.: B29C 41/06, B29C 41/36

(54) **Installation pour moulage par rotation et procédé de moulage par rotation**

(71) Demandeur: Persico S.p.A., 24027 Nembro (BG) (IT)
(72) Inventeur: Perrier, Michel, 01250, JASSERONE (FR); Convert, Thierry, 01250, JASSERON (FR)
(74) Mandataire: Ferroni, Filippo

(57) **Abrégé**

Cette installation (1) pour moulage par rotation à partir d'un matériau thermoplastique sous forme solide comprend un moule (2), ainsi que des moyens (8, 10) de mise en rotation du moule. L'installation comprend en outre une unité de préparation (4) du matériau thermoplastique à mouler, cette unité étant apte à transformer le matériau sous forme solide en un matériau sous forme fluide, et des moyens (32) de déplacement relatif de l'unité de préparation et du moule, entre une première configuration dans laquelle le moule et l'unité sont raccordés de sorte que le matériau sous forme fluide puisse être introduit dans le moule, et une deuxième configuration dans laquelle le moule et l'unité ne sont pas raccordées.

## Description

La présente invention concerne une installation pour moulage par rotation, ainsi qu'un procédé de moulage par rotation.

Un procédé de moulage par rotation, couramment appelé « rotomoulage », est un procédé de mise en forme de matériaux plastiques, et plus particulièrement de matériaux thermoplastiques. Dans un premier temps, un moule, composé par exemple de deux demi-coquilles en acier ou en aluminium, est chargé en matériau thermoplastique alors sous la forme de poudre micronisée. L'utilisation de poudre micronisée, dont les grains la constituant ont une taille généralement comprise entre 100 µm et 500 µm, est nécessaire pour s'assurer de la présence de peu d'inertie à la montée en température de la matière.

Dans un deuxième temps, pendant que le moule est chauffé, par exemple, dans un four, il effectue des mouvements de rotation pouvant être bi-axiaux, à savoir selon deux axes perpendiculaires. Ainsi, le matériau se transforme en fondant et peut alors couler le long de la paroi interne du moule.

Par la suite, le moule est refroidi pour figer et solidifier la matière en appui contre la paroi interne du moule. On procède ensuite à l'ouverture du moule pour en extraire la pièce réalisée. Ce cycle peut ensuite être répété. Un tel procédé permet ainsi d'obtenir des pièces plastiques creuses et de grande taille.

Toutefois, le coût des matériaux micronisés est substantiellement supérieur au coût de matériaux sous la forme de granulés de taille millimétrique pouvant être notamment utilisés dans les procédés de moulage par injection. Cet écart de prix, réel pour des matériaux tels que le polyéthylène ou le polypropylène, est accentué pour les matériaux thermoplastiques dits techniques tels que, par exemple, le polyamide. Ce type de matériau présente en effet des caractéristiques mécaniques lui permettant de répondre à des cahiers des charges plus exigeants, notamment en termes de robustesse ou de résistance à l'usure.

Le but de la présente invention est de prévoir une installation pour moulage par rotation capable d'utiliser les matériaux thermoplastiques prévus pour le moulage par injection, garantissant ainsi une large gamme de matériaux à disposition du fabricant, tout en restant à prix adapté par rapport au marché visé.

A cet effet, l'invention a pour objet une installation pour moulage par rotation à partir d'un matériau thermoplastique sous forme solide, comprenant :
- un moule,
- des moyens de mise en rotation du moule,
caractérisée en ce que l'installation comprend en outre :
- une unité de préparation du matériau thermoplastique à mouler,
cette unité étant apte à transformer le matériau sous forme solide en un matériau sous forme fluide,
- des moyens de déplacement relatif de l'unité de préparation et du moule, entre une première configuration, dans laquelle le moule et l'unité sont raccordés de sorte que le matériau sous forme fluide puisse être introduit dans le moule, et une deuxième configuration, dans laquelle le moule et l'unité ne sont pas raccordées.

Grâce à l'installation selon l'invention, le fabricant de pièces moulées est en mesure de réaliser des pièces creuses de grande taille en matériau thermoplastique à un prix compétitif, tout en étant capable de proposer à sa clientèle une large gamme de matières premières.

Suivant d'autres caractéristiques avantageuses de l'installation pour moulage par rotation conforme à l'invention, prises isolement ou selon toutes les combinaisons techniquement possibles :
- l'unité de préparation comprend un fourreau cylindrique comportant :
- des premiers moyens de chauffage, adaptés pour chauffer le matériau à mouler,
- des moyens de mise sous pression du matériau à mouler, adaptés pour permettre l'introduction du matériau dans le moule ;
- les moyens de mise sous pression sont une vis sans fin, adaptée pour malaxer et transporter le matériau vers une extrémité du fourreau ;
- les premiers moyens de chauffage sont des résistances électriques disposées sur la périphérie du fourreau ;
- l'unité de préparation comprend une vanne, disposée entre l'extrémité du fourreau et le moule dans la première configuration ;
- l'unité de préparation comprend un pot de transfert, disposé entre l'extrémité du fourreau et la vanne, ce pot étant adapté pour permettre l'introduction du matériau à mouler dans le moule, dans la première configuration, et pour accumuler le matériau à mouler issu du fourreau, dans la deuxième configuration ;
- le moule comprend des deuxièmes moyens de chauffage ;
- les premiers et deuxièmes moyens de chauffage sont adaptés pour que la température du matériau à mouler et la température du moule soient sensiblement égales, dans la première configuration.

L'invention a également pour objet un procédé de moulage par rotation, comprenant les étapes suivantes :
a) introduire un matériau thermoplastique à mouler sous forme solide dans une unité de préparation,
b) chauffer et mettre sous pression le matériau à mouler dans l'unité de préparation, de façon à le transformer en un matériau sous forme fluide,
c) amener l'unité de préparation et un moule dans une première configuration dans laquelle le moule et l'unité de préparation sont raccordés,
d) introduire dans le moule chauffé une partie au moins du matériau sous forme fluide présent dans l'unité de préparation,
e) séparer le moule et l'unité de préparation l'un de l'autre dans une deuxième configuration dans laquelle le moule et l'unité de préparation ne sont pas raccordés, et
f) mettre en rotation le moule.

Suivant une caractéristique avantageuse du procédé de moulage par rotation conforme à l'invention :
- la température de chauffage du matériau à mouler dans l'unité de préparation est sensiblement égale à la température du chauffage du moule.

L'invention sera mieux comprise à la lecture de la description qui va suivre, donnée uniquement à titre d'exemple non limitatif et faite en se référant aux dessins sur lesquels :
- la figure 1 est une vue schématique d'installation pour moulage par rotation dans une première configuration, selon la présente invention ;
- la figure 2 est une vue schématique de l'installation représentée à la figure 1, dans une deuxième configuration ;
- la figure 3 est une vue schématique analogue à la figure 1 pour une installation pour moulage par rotation, selon un deuxième mode de réalisation de la présente invention.

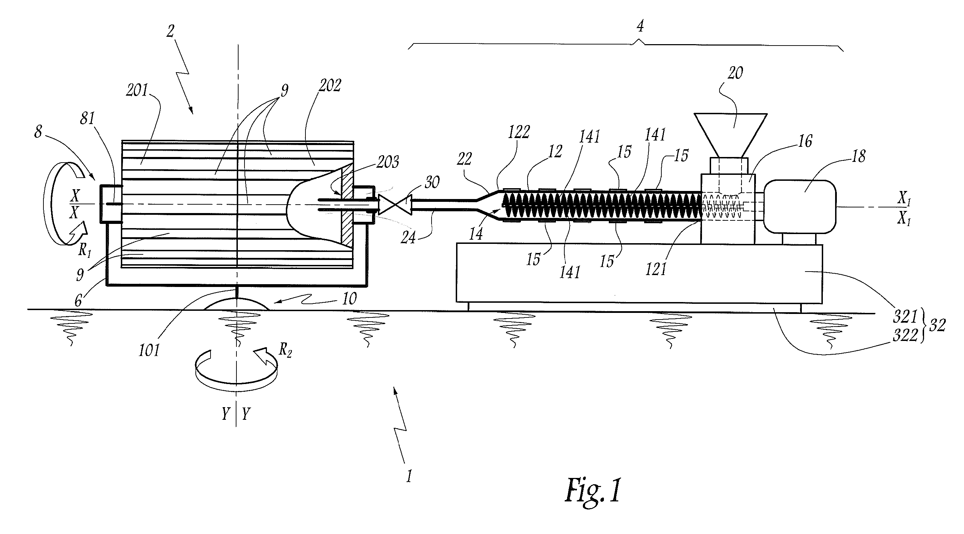

La figure 1 représente une installation 1 pour moulage par rotation, comprenant un moule 2, ainsi qu'une unité 4 de préparation de matériaux thermoplastiques destinés à être introduits dans le moule.

Le moule 2 est monté sur un support 6. L'installation 1 comprend également des moyens 8 et 10 de mise en rotation du moule 2. Les moyens de mise en rotation 8 comprennent un moteur non représenté entraînant en rotation un arbre 81 disposé le long d'un axe horizontal X-X. L'arbre 81 est solidaire du moule 2. Les moyens de mise en rotation 10 comprennent également un moteur non représenté, ainsi qu'un arbre 101 entraîné par ce moteur et s'étendant selon un axe vertical Y-Y, sensiblement perpendiculaire à l'axe X-X. Ainsi, le moule 2 peut effectuer simultanément une rotation autour de l'axe X-X dans le sens de la flèche R₁, ainsi qu'une rotation autour de l'axe Y-Y dans le sens de la flèche R₂.

A titre de variante, le moule pour être monté sur un bâti comprenant deux arbres disposés respectivement le long de l'axe X-X et de l'axe Y-Y, les deux arbres étant solidaires du moule. Le moule 2 comprend deux demi-coquilles 201 et 202 symétriques par rapport à l'axe Y-Y. Les deux demi-coquilles sont agencées pour se séparer de manière à pouvoir procéder au démoulage de la pièce rotomoulée. Le moule 2 comprend une paroi interne 203, partiellement visible à la figure 1 du fait de la présence d'un arrachement d'une partie de la demi-coquille 202. Le moule 2 comprend des moyens de chauffage formés par des résistances électriques 9 disposées sur le moule 2. Les résistances 9 sont en forme de bandes horizontales s'étendant sur chaque demi-coquille, sensiblement parallèlement à l'axe X-X. En variante, le moule 2 peut comprendre un circuit externe, sous la forme d'un serpentin, dans lequel circule un fluide caloporteur, tel que de l'huile. Le moule est alors chauffé par un transfert de chaleur entre le fluide et le moule. On peut également prévoir de placer le moule dans un four.

L'unité de préparation 4 comprend un fourreau cylindrique 12 dans lequel est disposée une vis sans fin 14. Par souci de clarté, la représentation du fourreau 12 est une coupe selon un plan défini par les deux axes X-X et Y-Y. Sur la périphérie du fourreau 12 sont disposées des résistances électriques 15 destinées à chauffer le contenu du fourreau. Une première extrémité 121 du fourreau 12 est raccordée à un carter 16 de protection. Un moteur 18, disposé de manière adjacente au carter 16, a pour fonction d'entraîner en rotation la vis sans fin 14 autour d'un axe horizontal X₁-X₁ sensiblement parallèle à l'axe X-X. On peut noter que ces deux axes ne sont pas nécessairement parallèles.

La vis sans fin 14 comprend une pluralité de filets 141 destinés à entraîner la matière thermoplastique vers la deuxième extrémité 122 du fourreau 12.

Sur le support 16 est disposée une trémie d'alimentation 20 adaptée pour recevoir les matériaux thermoplastiques sous forme de granulés. Ces granulés ont généralement une plus grande dimension comprise entre 1 mm et 4 mm. Ainsi, l'installation 1 est alimentée en matériau à mouler sous forme solide.

Une buse convergente 22 est solidaire de la deuxième extrémité 122 du fourreau 12. La forme tronconique de la buse 22 permet de faciliter l'écoulement de la matière thermoplastique préparée dans le fourreau en augmentant la pression. La buse est raccordée par un conduit 24 au moule 2. Le conduit 24 comprend une vanne 30. A titre de variante, on peut prévoir de ne pas utiliser de conduit 24. La buse 22 est alors directement raccordée à la vanne 30. De la même manière, en aval de la vanne, on peut prévoir un raccord à portée tronconique, entre la vanne et le moule.

Le fourreau 12, le support 16, ainsi que le moteur 18 sont disposés sur des moyens 32 de déplacement de l'unité de préparation 4 par rapport au moule 2.

Ces moyens de déplacement comprennent un bâti 321 comprenant une partie saillante 322 agencée pour coulisser dans un rail non représenté à la figure 1. On peut prévoir plusieurs parties saillantes disposées de manière parallèle sous le bâti 321. A titre de variante, des roues, solidaires du bâti, peuvent coulisser dans les rails. II peut également être prévu de fixer sur le bâti des paliers comprenant une ouverture agencée pour permettre le passage du rail. Les moyens de déplacement peuvent être entraînés par un moteur non représenté à la figure 1.

Ce déplacement peut également s'opérer manuellement.

En fonctionnement, l'unité de préparation est, dans un premier temps, alimentée par un matériau thermoplastique sous forme solide introduit dans la trémie d'alimentation 20. Par le mouvement en rotation de la vis sans fin 14 et grâce aux filets 141, le matériau est progressivement introduit dans le fourreau 12 puis mis en pression et déplacé vers la buse 22. Grâce aux résistances électriques 15, le matériau présent dans le fourreau 12 est chauffé et devient fluide. La préparation du matériau consiste donc en un malaxage destiné à rendre le matériau de moulage pâteux et fluide.

La pression générée par la rotation de la vis sans fin 14 permet d'introduire le matériau par la buse 22 dans le conduit 24. La vanne 30 étant fermée, le matériau s'accumule dans le conduit 24. Dans le mode de réalisation de l'unité de préparation ne comprenant pas de conduit 24, le matériau s'accumule dans la buse 22 et dans la partie du fourreau 12 adjacente à cette buse. Grâce aux moyens de déplacement 32, l'unité de préparation 4 est déplacée de sorte que le conduit 24 soit partiellement introduit dans le moule 2.

Cette configuration, dans laquelle le moule 2 et l'unité de préparation 4 sont raccordés, est représentée à la figure 1. Il est à noter que le déplacement de l'unité 4 peut être effectué avant le remplissage de la trémie d'alimentation 20 par le matériau thermoplastique en granulés.

Les moyens de chauffage 9 du moule 2 entrent en fonctionnement de manière à porter le moule à une température comparable à celle du matériau de moulage thermoplastique sous forme fluide présent dans l'unité 4. Ainsi, lors de l'introduction du matériau dans le moule 2, on évite un choc thermique qui aurait pour conséquence de figer le matériau dans le moule, avant même la mise en rotation du moule. Dans ce cas de figure, le matériau ne pourrait pas se répartir de manière homogène dans le moule. On peut prévoir de faire fonctionner les moyens de chauffage 9 au moment de l'alimentation de l'unité 4 en matériau.

La vanne 30 est ensuite ouverte, pour permettre à au moins une partie du matériau thermoplastique fluide préparé par l'unité 4, de pénétrer dans le moule sous l'effet de la pression régnant dans le conduit 24. Pour faciliter la pénétration du matériau dans le moule, on peut prévoir de reculer la vis 14 en direction de l'extrémité 121 du fourreau puis de l'avancer en direction de l'extrémité 122. La vis exerce alors directement une pression sur la matière à mouler, à la façon d'un piston.

La préparation du matériau thermoplastique dans le fourreau 12 permet d'obtenir un matériau de moulage fluide prêt à être directement introduit dans le moule 2. Cette étape de préparation permet à l'utilisateur de s'abstenir d'utiliser une matière micronisée, à savoir une matière dont la taille des particules solides est de l'ordre de 100 µm à 500 µm, cette matière ayant un prix substantiel. En effet, le matériau thermoplastique micronisé étant directement introduit dans le moule dans les installations pour moulage par rotation de l'art antérieur, il est nécessaire qu'il ait une taille de grains qui soit peu sujette à l'inertie lors de la montée de la température. En d'autres termes, la taille des grains doit être la plus petite possible. Seul le chauffage du moule fait office de préparation du matériau pour lui permettre de se fluidifier et de glisser sur toute la surface interne du moule. Pour ce faire, il faut des grains d'une taille inférieure au millimètre. L'objet de l'invention permet d'utiliser des granulés de taille supérieure au millimètre qui sont certes plus sensibles à une inertie lors d'une montée de température. Cette caractéristique technique n'est pas gênante puisque l'étape de préparation du matériau dans l'unité 4 palie cet inconvénient et permet d'obtenir un matériau pâteux et fluide avant son introduction dans le moule 2.

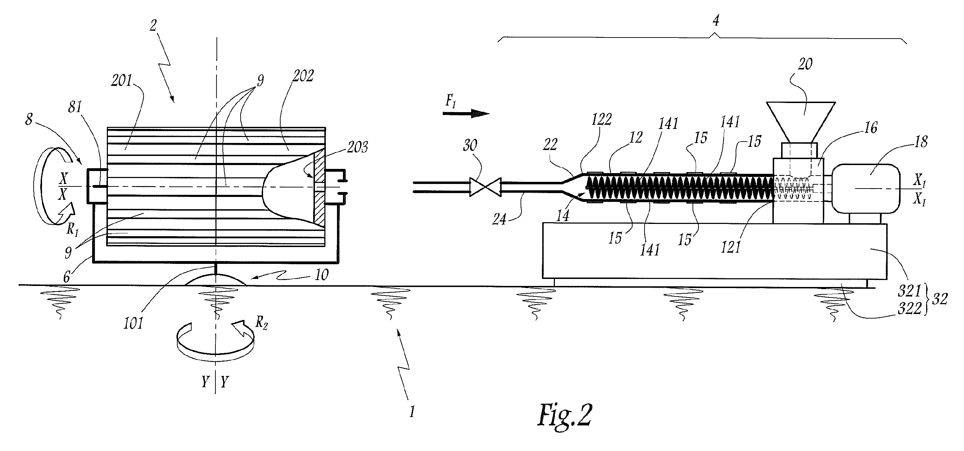

Grâce aux moyens de déplacement 32, l'unité de préparation 4 est déplacée, au terme de l'opération de chargement du moule 2 en matériau de moulage fluide, selon la flèche F₁, de sorte que le conduit 24 ne soit plus engagé dans le moule 2. Dans cette configuration dite reculée représentée à la figure 2, le moule 2 et l'unité de préparation 4 ne sont plus raccordés. Grâce aux moyens de mise en rotation 8 et 10, le moule commence à effectuer une rotation que l'on peut qualifier de bi-axiale selon les axes X-X et Y-Y, ce qui est possible sans interférer avec l'unité 4 qui est alors éloignée du moule. II faut noter que les moyens de chauffage 9 du moule continuent de fonctionner.

Ainsi, le matériau thermoplastique reste fluide et peut se repartir de manière uniforme sur toute la paroi interne 203 du moule.

A titre de variante, il peut être prévu que seuls les moyens de mise en rotation 8 soient en fonctionnement pendant l'introduction du matériau préparé dans le moule 2. En d'autres termes, le moule 2 peut être en rotation autour de l'axe X-X.

Le moule 2 est ensuite refroidi de manière à ce que le matériau thermoplastique se fige sur la paroi du moule. Dans un mode de réalisation comprenant un circuit externe de chauffage, on peut prévoir une étape de trempe à l'huile froide, en faisant circuler ce fluide dans le serpentin caloporteur, en lieu et place de l'huile chaude circulant pendant la phase de chauffage. On stoppe ensuite la rotation du moule.

La pièce rotomoulée obtenue est alors démoulée. L'opération décrite ci-dessus peut alors être recommencée.

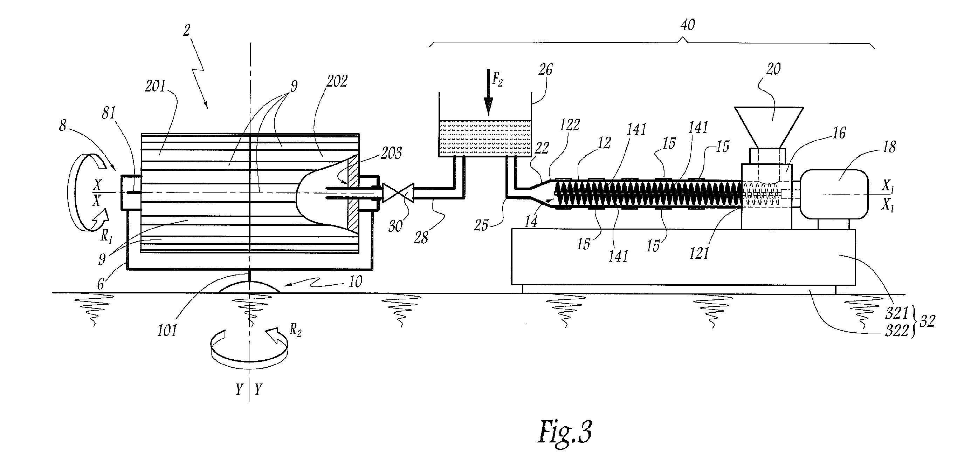

Pendant que le matériau thermoplastique est en train d'être rotomoulé dans le moule 2, l'unité de préparation 4 peut continuer à fonctionner de manière autonome. En effet, le fourreau 12 peut être rempli par une dose souhaitée de matériau thermoplastique, étant entendu que la vanne 30 est alors dans une position fermée. Cette préparation a lieu en temps masqué. On peut ainsi noter un gain de temps non négligeable dans le cadre d'une industrialisation du procédé. Le deuxième mode de réalisation, représenté à la figure 3, illustre une unité de préparation 40 comprenant en outre un pot de transfert 26 par rapport à l'unité 4 représentée aux figures 1 et 2. Le pot est raccordé, d'une part, à la buse 22 par un conduit 25 et, d'autre part, au moule 2 par un conduit 28. On peut noter que les éléments représentés à la figure 3, analogues à ceux représentés à la figure 1, ont la même référence.

En fonctionnement, l'unité 40 est, dans un premier temps, éloignée du moule 2. Le pot de transfert 26, alimenté par le conduit 25, se remplit donc progressivement de matériau thermoplastique. La vanne 30 étant fermée, le matériau s'accumule dans le pot 26 qui fait alors office de réservoir. Grâce aux moyens 32 de déplacement, l'unité 40 est raccordée au moule 2. Une fois la vanne 30 ouverte, le matériau pénètre dans le moule du fait de la gravité qui fait office de pression sur le contenu du pot. Pour accélérer cette introduction, on peut prévoir d'exercer une pression selon la flèche F₂ sur la matière accumulée dans le pot 26.

De la même manière que pour le premier mode de réalisation représenté à la figure 1, le remplissage du pot de transfert 26 peut se faire en temps masqué.

Le pot peut continuer à être rempli par le matériau thermoplastique issu du fourreau 12 pendant la rotation du moule 2, la vanne 30 étant bien entendu fermée.

A titre de variante, on peut prévoir des moyens de chauffage disposés sur le fond du pot de transfert 26, de manière à maintenir le matériau fluide, issu du fourreau 12 à une température donnée, à une température sensiblement identique dans le pot. Les moyens de chauffage peuvent être des résistances électriques disposées sur le fond et/ou la périphérie du pot 26. Il peut également être prévu un serpentin dans lequel circule un fluide caloporteur.

A titre de variante, on peut prévoir des moyens de déplacement agencés pour déplacer le support 6 du moule 2, l'unité restant alors fixe. Dans ce mode de réalisation, le support peut comprendre une partie en saillie, adaptée pour se déplacer dans un rail.

Les matériaux thermoplastiques adaptés pour ce type d'installation pour moulage par rotation peuvent être, à titre d'exemples non-limitatifs, les polyéthylènes, les polypropylènes, les polychlorures de vinyle, les polystyrènes, le poly-butylène téréphtalate (PBT), le polyoxyméthylène (POM), l'acrylonitrile butadiène styrène (ABS), les polyamides, les polycarbonates, les résines acétales ou les matériaux thermoplastiques composites chargés en fibres de verre ou en fibres de carbone. En variante, ces matériaux thermoplastiques composites peuvent également comprendre soit des charges végétales soit des charges minérales.

## Revendications

1. Installation (1) pour moulage par rotation à partir d'un matériau thermoplastique sous forme solide, comprenant :
- un moule (2),
- des moyens (8, 10) de mise en rotation du moule,
**caractérisée en ce que** l'installation comprend en outre :
- une unité de préparation (4, 40) du matériau thermoplastique à mouler, cette unité étant apte à transformer le matériau sous forme solide en un matériau sous forme fluide,
- des moyens (32) de déplacement relatif de l'unité de préparation et du moule, entre une première configuration, dans laquelle le moule et l'unité sont raccordés de sorte que le matériau sous forme fluide puisse être introduit dans le moule, et une deuxième configuration, dans laquelle le moule et l'unité ne sont pas raccordées.

2. Installation selon la revendication 1, **caractérisée en ce que** l'unité de préparation (4, 40) comprend un fourreau (13) cylindrique comportant :
- des premiers moyens de chauffage (15), adaptés pour chauffer le matériau à mouler,
- des moyens (14) de mise sous pression du matériau à mouler, adaptés pour permettre l'introduction du matériau dans le moule (2).

3. Installation selon la revendication 2, **caractérisée en ce que** les moyens de mise sous pression (14) sont une vis sans fin, adaptée pour malaxer et transporter le matériau vers une extrémité (122) du fourreau (12).

4. Installation selon la revendication 2 ou 3, **caractérisée en ce que** les premiers moyens de chauffage (15) sont des résistances électriques disposées sur la périphérie du fourreau (12).

5. Installation selon l'une quelconque des revendications 2 à 4, **caractérisée en ce que** l'unité de préparation (4, 40) comprend une vanne (30), disposée entre l'extrémité (122) du fourreau (12) et le moule (2) dans la première configuration.

6. Installation selon la revendication 5, **caractérisée en ce que** l'unité de préparation (4) comprend un pot de transfert (26), disposé entre l'extrémité (122) du fourreau (12) et la vanne (30), ce pot étant adapté pour permettre l'introduction du matériau à mouler dans le moule, dans la première configuration, et pour accumuler le matériau à mouler issu du fourreau, dans la deuxième configuration.

7. Installation selon l'une quelconque des revendications précédentes, **caractérisée en ce que** le moule (2) comprend des deuxièmes moyens de chauffage (9).

8. Installation selon la revendication 7, **caractérisée en ce que** les premiers et deuxièmes moyens de chauffage (9, 15) sont adaptés pour que la température du matériau à mouler et la température du moule (2) soient sensiblement égales, dans la première configuration.

9. Procédé de moulage par rotation, comprenant les étapes suivantes :
a) introduire un matériau thermoplastique à mouler sous forme solide dans une unité de préparation (4, 40),
b) chauffer et mettre sous pression le matériau à mouler dans l'unité de préparation, de façon à le transformer en un matériau sous forme fluide,
c) amener l'unité de préparation (4, 40) et un moule (2) dans une première configuration dans laquelle le moule et l'unité de préparation sont raccordés,
d) introduire dans le moule chauffé une partie au moins du matériau sous forme fluide présent dans l'unité de préparation,
e) séparer le moule et l'unité de préparation l'un de l'autre dans une deuxième configuration dans laquelle le moule et l'unité de préparation ne sont pas raccordés, et
f) mettre en rotation le moule (2).

10. Procédé selon la revendication 9, **caractérisé en ce que** la température de chauffage du matériau à mouler dans l'unité de préparation (4) est sensiblement égale à la température du chauffage du moule (2).
